# EUROPEAN PATENT APPLICATION

(11) **EP 4 503 322 A1**
(43) Date of publication of application: **05.02.2025**
(21) Application number: 23779951.5
(22) Date of filing: 22.03.2023
(51) Int. Cl.: H01M 50/538, H01M 10/04, H01M 10/052, H01M 10/0587, H01M 50/536, H01M 50/545

(54) **POWER STORAGE DEVICE**

(30) Priority: 31.03.2022 JP 2022058106
(71) Applicant: Panasonic Intellectual Property Management Co., Ltd., Osaka-shi, Osaka 540-6207 (JP)
(72) Inventor: SAKAMOTO, Shinichi, Osaka-shi, Osaka 540-6207 (JP); KOZUKI, Kiyomi, Osaka-shi, Osaka 540-6207 (JP); GESHI, Shinya, Osaka-shi, Osaka 540-6207 (JP)
(74) Representative: Eisenführ Speiser
(86) International application number: PCT/JP2023/011222
(87) International publication number: WO 2023/189939

(57) **Abstract**

A power storage device includes: an electrode body formed by winding a positive electrode, a negative electrode, and a separator; a cap disposed close to one end of the electrode body in a winding axis direction of the electrode body; and a plurality of positive electrode tabs connecting the positive electrode to the cap, the plurality of positive electrode tabs at least partially overlapping each other forming an overlapped part that is joined to the cap.

## Description

### TECHNICAL FIELD

The present disclosure relates to a power storage device.

### BACKGROUND ART

Power storage devices are used as power sources for power of electric vehicles, for example. In recent years, the spread of electric vehicles requires cost reduction and improvement in productivity of the power storage devices, and upsizing of the power storage devices has accelerated. The upsizing of the power storage devices requires high capacity and high output of the power storage devices.

To achieve the high output of the power storage devices, reducing internal resistance of the power storage devices are conceivable. For example, PTL 1 discloses a technique to reduce internal resistance of a power storage device by forming an electrode plate in a strip shape of an electrode body into a multi-tab structure provided with a plurality of tabs disposed side by side in a longitudinal direction of the electrode plate.

### Citation List

### Patent Literature

PTL 1: Unexamined Japanese Patent Publication No. 2000-251871

### SUMMARY OF THE INVENTION

Unfortunately, the power storage device disclosed in PTL 1 has a large number of parts in a conductive path from the electrode body to a positive electrode external terminal, so that the internal resistance is less likely to be reduced.

It is an object of the present disclosure to provide a power storage device capable of reducing internal resistance.

A power storage device according to an aspect of the present disclosure includes: an electrode body formed by winding a positive electrode, a negative electrode, and a separator; an external terminal disposed on a first end side of the electrode body in a winding axis direction of the electrode body; and a plurality of tabs connecting a first electrode to the external terminal, the first electrode being one of the positive electrode and the negative electrode, the plurality of tabs at least partially overlapping each other forming an overlapped part that is joined to the external terminal.

The aspect of the present disclosure enables reducing the internal resistance.

### BRIEF DESCRIPTION OF THE DRAWINGS

Fig. 1 is a schematic sectional view of a power storage device as an example of an exemplary embodiment as viewed laterally.
Fig. 2 is a schematic view of a positive electrode external terminal and a positive electrode tab as an example of an exemplary embodiment as viewed from below.
Fig. 3 is a schematic view of a positive electrode external terminal and a positive electrode tab as another example of an exemplary embodiment as viewed from below.
Fig. 4 is a schematic view of a joint between a positive electrode external terminal and a plurality of positive electrode tabs as viewed laterally.
Fig. 5 is a schematic view of a joint between a positive electrode external terminal and a plurality of positive electrode tabs as viewed from below.
Fig. 6 is a schematic view illustrating a manufacturing process of a power storage device.
Fig. 7 is a schematic view illustrating a manufacturing process of the power storage device continued from Fig. 6.

### DESCRIPTION OF EMBODIMENT

An example of an exemplary embodiment of the present invention will be described in detail below. In the following description, specific shapes, materials, directions, numerical values, etc. are examples shown to facilitate understanding of the present invention and may be changed as appropriate to suit uses, purposes, specifications, or other requirements.

### [General configuration of power storage device]

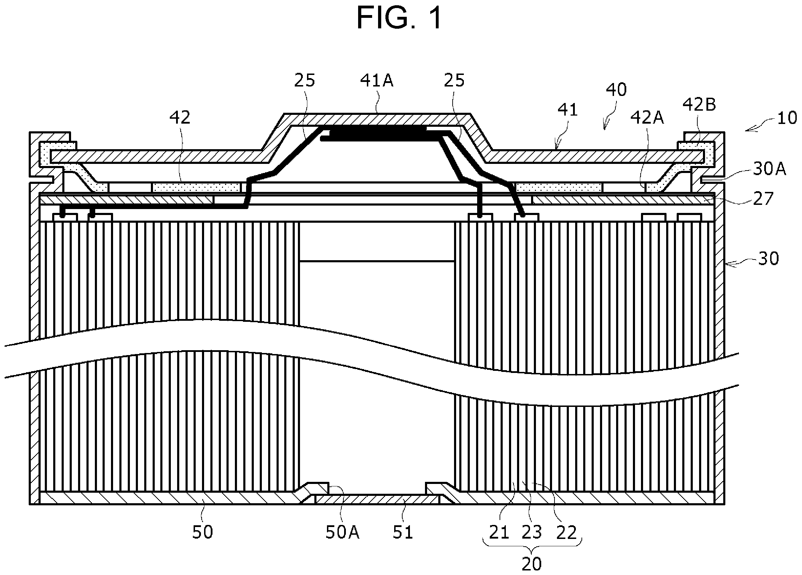

Power storage device 10, which is an example of an exemplary embodiment, will be described with reference to Fig. 1.

Power storage device 10 is mainly used as a power source for power. Power storage device 10 is used as a power source of an electric device driven by a motor such as an electric car, an electric power tool, an electric power-assisted bicycle, an electric motorcycle, an electric wheelchair, an electric tricycle, or an electric cart. However, the application of power storage device 10 is not limited, and the power storage device may be used as a power source for various electric devices used indoors and outdoors, such as electric devices other than the electrically powered devices, for example, cleaners, wireless devices, lighting devices, digital cameras, and video cameras.

Power storage device 10 includes electrode body 20, exterior can 30 that is formed in a cylindrical shape and houses electrode body 20, sealing body 40 that includes cap 41 as a positive electrode external terminal that closes one opening part of exterior can 30, and negative electrode current collecting plate 50 as a negative electrode external terminal that closes another opening part of exterior can 30. Exterior can 30 accommodates an electrolyte solution together with electrode body 20. Although the electrolyte solution may be an aqueous electrolyte solution, a non-aqueous electrolyte solution is used in the present exemplary embodiment. For convenience of description, a side close to sealing body 40 of power storage device 10 is defined as an upper side, and a side close to negative electrode current collecting plate 50 of power storage device 10 is defined as a lower side, in the following description.

Power storage device 10 further includes: a plurality of positive electrode tabs 25 that extends from upper ends in an axial direction (or also referred to as a winding axis direction) of electrode body 20 and that connects positive electrodes 21 constituting electrode body 20 to cap 41; negative electrode current collecting plate 50 that is disposed on a lower side in the axial direction of the electrode body 20 and is connected to negative electrodes 22 constituting electrode body 20; and upper insulating plate 27 that is disposed between electrode body 20 and sealing body 40. Power storage device 10 of the present disclosure may be provided with a negative electrode provided with a tab joined to cap 41. Power storage device 10 may be also provided on its lower side with a positive electrode that joins a current collecting plate to a core body exposed part.

Positive electrode 21, negative electrode 22, and separator 23 of electrode body 20 are each a belt-like elongated body, and are alternately stacked in a radial direction of electrode body 20 by being spirally wound. Electrode body 20 may be provided in its innermost periphery with a hollow part passing through electrode body 20 in the axial direction. However, electrode body 20 is not necessarily provided with the hollow part. Negative electrode 22 includes a mixture layer formed to have a size slightly larger than that of a mixture layer of positive electrode 21 to prevent precipitation of lithium. That is, the mixture layer of negative electrode 22 may be formed to be longer than the mixture layer of positive electrode 21 in a longitudinal direction and a width direction (lateral direction). Separator 23 is formed to have a size slightly larger than at least positive electrode 21, and two separators are disposed to sandwich positive electrode 21, for example.

Positive electrode 21 includes a positive electrode core body in the shape of a belt and a positive electrode mixture layer formed on at least one surface of the core body. Available examples of the positive electrode core body include foil of metal, such as aluminum or an aluminum alloy, the metal being stable in a potential range of positive electrode 21, and a film in which the metal is disposed on a surface layer. The positive electrode mixture layer preferably contains a positive active material, a conductive agent such as acetylene black, and a binder such as polyvinylidene fluoride, for example, and is preferably formed on both surfaces of the positive core body. Available examples of the positive electrode active material include a lithium transition metal composite oxide.

Positive electrode tab 25 electrically connects positive electrode 21 to cap 41. Each of the plurality of positive electrode tabs 25 is connected to positive electrode 21, and is preferably directly joined to the positive electrode core body by welding or the like. Thus, the positive electrode core body is provided on its surface with a part to which positive electrode tab 25 is joined, the part being preferably coated with no mixture layer. The plurality of positive electrode tabs 25 is directly joined to a lower surface of raised part 41A of cap 41 of sealing body 40. Positive electrode tab 25 may not be separated from the positive electrode core body. For example, a part of the positive electrode core body may extend in a tongue piece shape to function as positive electrode tab 25.

Negative electrode 22 includes a negative electrode core body in the shape of a belt and a negative electrode mixture layer formed on at least one surface of the core body. Available examples of the negative electrode core body include foil of metal, such as copper or a copper alloy, the metal being stable in a potential range of negative electrode 22, and a film in which the metal is disposed on a surface layer. The negative electrode mixture layer preferably contains a negative electrode active material and a binder such as styrene-butadiene rubber (SBR), for example, and is preferably formed on both surfaces of the negative electrode core body. Available examples of the negative electrode active material include graphite, and a silicon-containing compound. Negative electrode 22 includes a core body exposed part on which no negative electrode mixture layer is formed, the core body exposed part being formed at one end of the negative electrode core body in the lateral direction and extending in the longitudinal direction of the negative electrode core body. The core body exposed part is disposed protruding downward from separator 23 in the axial direction. Although a detailed joining method will be described later, the core body exposed part and negative electrode current collecting plate 50 are joined to each other by welding or the like.

A non-aqueous electrolyte contains a non-aqueous solvent and an electrolyte salt dissolved in the non-aqueous solvent. Available examples of the non-aqueous solvent include esters, ethers, nitriles, amides, and mixed solvents of two or more thereof. The non-aqueous solvent may contain a halogen-substituted product in which at least a part of hydrogen in these solvents is substituted with a halogen atom such as fluorine. Examples of the non-aqueous solvent include ethylene carbonate (EC), ethyl methyl carbonate (EMC), dimethyl carbonate (DMC), and mixed solvents thereof. Available examples of the electrolyte salt include a lithium salt such as LiPF₆. The non-aqueous electrolyte may be a gel electrolyte, a solid electrolyte, or the like, instead of an electrolyte solution.

Exterior can 30 is a metal container in a cylindrical shape with opposite ends in the axial direction that are open. Examples of the metal constituting exterior can 30 include aluminum, copper, iron, nickel, and alloys thereof. Exterior can 30 of the present exemplary embodiment is made of iron with a nickel-plated surface. Exterior can 30 includes groove 30A formed along its circumferential direction. Groove 30A is formed near an upper end opening of exterior can 30 and at a position away from an upper end opening edge (an upper end of exterior can 30) by a predetermined length. The predetermined length corresponds to 1% to 20% of an axial length of exterior can 30, for example.

Groove 30A is a part of exterior can 30, the part protruding inward, and is formed by spinning exterior can 30 from outside, for example. Groove 30A is formed at a position where exterior can 30 is reduced in diameter and is provided in its outer peripheral surface with a groove in the shape of a thin line. Groove 30A preferably has a substantially U-shaped section, and is preferably formed in an annular shape over the entire circumferential length of exterior can 30. Groove 30A may be formed by processing after electrode body 20 is accommodated in exterior can 30. Exterior can 30 used in power storage device 10 of the present disclosure is not limited to a configuration in which a container in a tubular shape with openings at opposite ends is joined to a current collecting plate. In particular, exterior can 30 having a shape in which one end in the axial direction is closed by a bottom part integrated with a tubular part may be used.

Sealing body 40 includes cap 41 and gasket 42, and is formed into a disk shape as a whole. Sealing body 40 is disposed on groove 30A of exterior can 30, and is fixed to the upper end of exterior can 30. The upper end opening of exterior can 30 is bent inward in the radial direction and caulked to sealing body 40. In other words, sealing body 40 is fixed to the upper end of exterior can 30 by groove 30A and a caulked part of exterior can 30 to close the opening of exterior can 30. The caulked part is formed in an annular shape along the circumferential direction of exterior can 30, and holds sealing body 40 in the axial direction together with groove 30A.

Cap 41 serving as a positive electrode external terminal is a metal member in a disk shape, and is exposed to the outside of exterior can 30 to form a top surface of power storage device 10. Examples of the metal constituting cap 41 include aluminum, copper, iron, nickel, and alloys thereof. Cap 41 of the present exemplary embodiment is made of aluminum. Cap 41 has a shape (raised part 41A) in which a central part in the radial direction protrudes outward from power storage device 10. Cap 41 is connected to a wiring material when power storage device 10 is modularized to form an assembled battery. Thus, cap 41 functions as an external terminal of power storage device 10 and is also called an external terminal or a top cover. Cap 41 in power storage device 10 of the present exemplary embodiment is connected to the plurality of positive electrode tabs 25, and cap 41 functions as a positive electrode external terminal.

Gasket 42 is provided between an outer peripheral part of cap 41 and exterior can 30. Gasket 42 is a rubber member or a resin member for preventing contact between cap 41 and exterior can 30 and securing electrical insulation between exterior can 30 and sealing body 40. Gasket 42 closes a gap between exterior can 30 and sealing body 40 to seal the inside of power storage device 10. Although accumulation of an electrolyte solution on an upper surface of gasket 42 is assumed, the electrolyte solution can be efficiently returned toward electrode body 20 by providing through-hole 42A. For example, a plurality of through-holes 42A is formed along a circumferential direction of gasket 42. Gasket 42 also includes annular part 42B covering cap 41 from the outer peripheral part to a skirt part of the raised part.

Negative electrode current collecting plate 50 as a negative electrode external terminal is a metal plate in a disk shape provided below electrode body 20 and made of nickel, a nickel alloy, or the like. Negative electrode current collecting plate 50 is made of an iron material with a nickel-plated surface, for example. Negative electrode current collecting plate 50 closes a lower end opening of exterior can 30 to form a bottom surface part of exterior can 30. In other words, negative electrode current collecting plate 50 has a function as a negative electrode external terminal and a function as a bottom surface part of exterior can 30. Negative electrode current collecting plate 50 is joined to a core body exposed part of negative electrode 22. Negative electrode current collecting plate 50 is provided with center hole 50A. Center hole 50A is closed by sealing plug 51 described later. Center hole 50A may overlap a hollow part of electrode body 20 and a joint between positive electrode tab 25 and cap 41 in the axial direction. This overlapping enables the joint to be easily formed.

Sealing plug 51 is a metal sealing member formed in a disk shape. Sealing plug 51 in the present exemplary embodiment is provided with a safety valve mechanism that operates when an abnormality occurs in power storage device 10. For example, sealing plug 51 may be provided with an annular engraved mark as a safety valve mechanism. When an abnormality occurs in power storage device 10 to increase internal pressure, this stamp may be preferentially broken to form a gas discharge port in sealing plug 51. Negative electrode current collecting plate 50 may be provided with an engraved mark that is broken to perform exhaust when internal pressure of power storage device 10 becomes equal to or higher than a predetermined value. Sealing plug 51 may be formed of an elastic member, and may be press-fitted into center hole 50A.

### "Positive electrode tab"

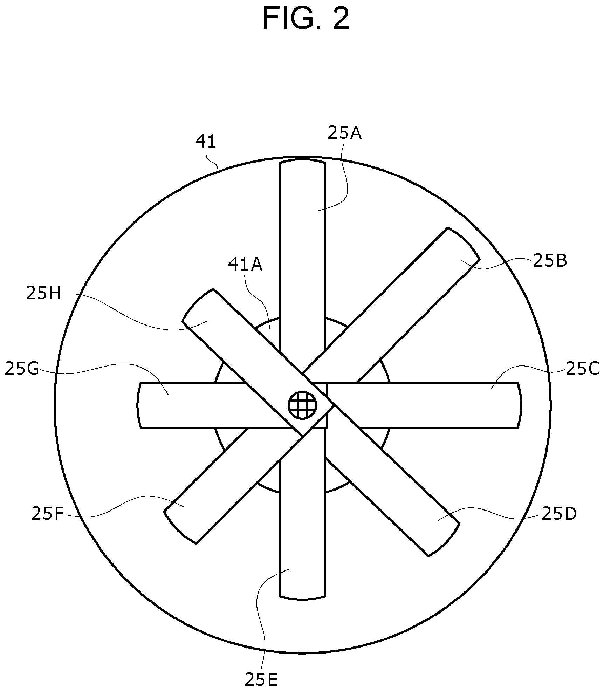

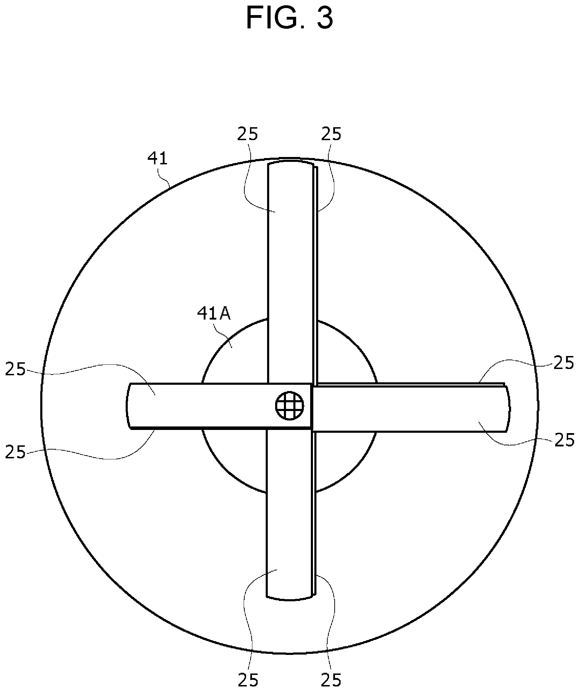

Positive electrode tab 25 will be described in detail with reference to Figs. 2 and 3.

Positive electrode tab 25 is a conductive member in a strip shape and electrically connects positive electrode 21 to cap 41. More specifically, positive electrode tab 25 is joined at one end to positive electrode 21, and is directly joined at the other end to the lower surface of raised part 41A of cap 41. That is, positive electrode tab 25 is directly joined to the lower surface of raised part 41A of cap 41 without interposing a current collecting member or the like therebetween.

Direct joining between positive electrode tab 25 to cap 41 enables reduction in the number of components in a conductive path from electrode body 20 to cap 41. Thus, a resistance value can be reduced in the path from electrode body 20 to cap 41. As a result, an internal resistance value of power storage device 10 can be lowered.

As illustrated in Fig. 2, the plurality of positive electrode tabs 25 is disposed extending radially from raised part 41A of cap 41. The plurality of positive electrode tabs 25 composed of positive electrode tabs 25A, 25B, 25C, 25D, 25E, 25F, 25G, and 25H is joined from an outermost peripheral side to an innermost peripheral side of electrode body 20 in the order listed above. Hereinafter, when respective positive electrode tabs 25 are not particularly distinguished, they are simply described as positive electrode tabs 25.

For example, when a plurality of positive electrode tabs is collected at one position in a circumferential direction of a power storage device and joined to a current collecting member, the positive electrode tabs have respective different lengths to the joint, and thus a load or stress acting on each of the positive electrode tabs against vibration or impact in a horizontal direction is less likely to be uniform. In contrast, radial placement of the plurality of positive electrode tabs 25 as in the present exemplary embodiment enables a load or stress acting on each of positive electrode tabs 25 against vibration or impact in the horizontal direction to be made more uniform, and thus enables strength of each of positive electrode tabs 25 against the vibration or impact in the horizontal direction to be improved. Additionally, deviation in length of the plurality of positive electrode tabs extending radially can be reduced as compared with the positive electrode tabs collected at one place, so that deviation in current collecting resistance between the tabs can be reduced.

When the plurality of positive electrode tabs is collected on one side of the power storage device and joined to the current collecting member, an overlapping part between corresponding positive electrode tabs 25 other than the joint increases in size to cause interference between positive electrode tabs 25 to increase. In contrast, the radial placement of the plurality of positive electrode tabs 25 as in the present exemplary embodiment enables an overlapping part between corresponding positive electrode tabs 25 to be reduced in size to enable reduction in interference between positive electrode tabs 25. As a result, positive electrode tab 25 can be improved is strength against expansion or contraction of electrode body 20 during charging and discharging.

The radial placement of the plurality of positive electrode tabs 25 also enables each of positive electrode tabs 25 to be minimized in length as compared with a case where the plurality of positive electrode tabs is collected on one side of the power storage device and joined to the current collecting member, for example. As a result, an internal space of power storage device 10 is widened, and battery capacity can be improved.

The plurality of positive electrode tabs 25 is radially disposed with angles of positive electrode tabs 25 adjacent to each other, the angles being substantially equal. Although eight positive electrode tabs 25 are radially disposed with an angle of 45° between positive electrode tabs 25 adjacent to each other in the illustrated example, the present invention is not limited thereto.

As illustrated in Fig. 3, some of the plurality of positive electrode tabs 25 may be disposed overlapping each other. Although two of eight positive electrode tabs 25 are radially disposed overlapping each other and an angle between positive electrode tabs 25 adjacent to each other in the circumferential direction of electrode body 20 is set to 90° in the illustrated example, the present invention is not limited thereto.

### "Joint between positive electrode tab and positive electrode external terminal"

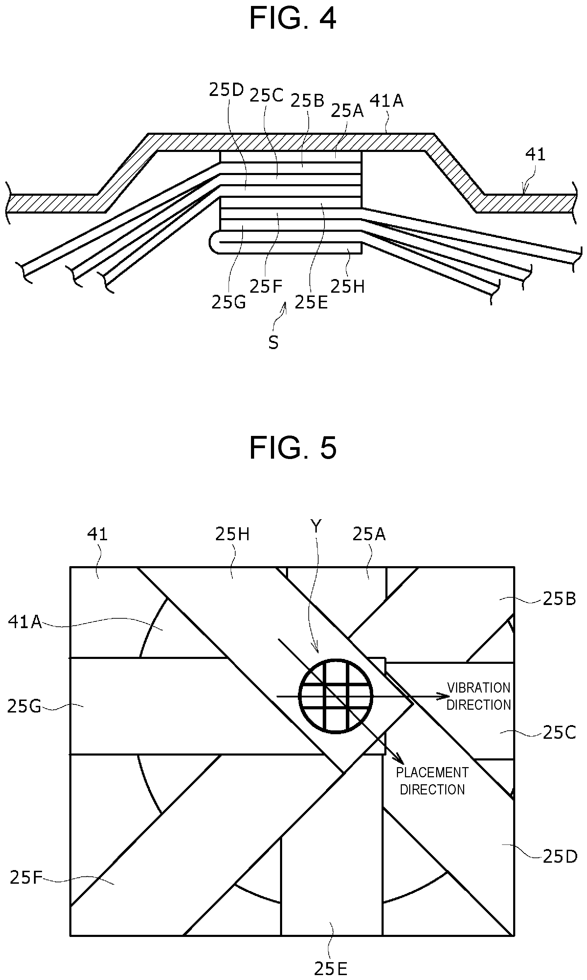

Positive electrode tab 25, cap 41, and joint S will be described with reference to Figs. 4 and 5.

As illustrated in Fig. 4, the plurality of positive electrode tabs 25 is stacked and joined to the lower surface of raised part 41A of cap 41 by welding in joint S between cap 41 and positive electrode tab 25. Joint S includes positive electrode tabs 25A, 25B, 25C, 25D, 25E, 25F, 25G, and 25H that are stacked in this order from a position close to cap 41 toward the axial direction. In other words, joint S includes the plurality of positive electrode tabs 25 in which positive electrode tab 25 joined close to an outer periphery of electrode body 20 is stacked at a position closer to cap 41 than positive electrode tab 25 joined close to an inner periphery of electrode body 20. However, the order of stacking of positive electrode tabs 25 is not limited to the above order.

Positive electrode tab 25H stacked (stacked on the lowermost layer) at a position farthest from cap 41 (closest to electrode body 20) in the stacking direction of the plurality of positive electrode tabs 25 is folded back and doubly stacked and joined in joint S between cap 41 and positive electrode tabs 25. Positive electrode tab 25H is brought into contact with a horn or a tool when the plurality of positive electrode tabs 25 and cap 41 are joined by ultrasonic welding.

When positive electrode tabs 25 and cap 41 are joined in joint S by ultrasonic welding, joint S has a problem of causing a crack due to contact of a horn or a jig and vibration during welding. Positive electrode tab 25H is folded back and doubly stacked, so that positive electrode tab 25H is improved in breaking strength to reduce occurrence of a crack in positive electrode tab 25H. Positive electrode tab 25H includes a folded part that is not a conductive path, so that the current collecting resistance is less likely to deteriorate even when a crack occurs in the folded part of positive electrode tab 25H. When a distal end of positive electrode tab 25H is folded back and positive electrode tabs 25 are stacked in order from the tab closest to the outer periphery of electrode body 20 to the tab closest to the inner periphery thereof in joint S as described above, positive electrode tab 25H may have a part extending from electrode body 20 in a winding direction of electrode body 20, the part being longer in length than that of positive electrode tab 25G (second tab) located adjacent to positive electrode tab 25H (first tab).

As illustrated in Fig. 5, welding mark Y is formed on a lower surface of positive electrode tab 25H stacked at the position farthest from cap 41 in joint S between cap 41 and positive electrode tab 25. At this time, welding mark Y is disposed in a direction intersecting a direction in which positive electrode tab 25H extends. For example, welding mark Y is inclined by approximately 45° with respect to the direction in which positive electrode tab 25H extends (a longitudinal direction of the strip shape). When a plurality of protrusions is formed on an end surface of a distal end of ultrasonic tool T, parts in welding mark Y, the parts corresponding to the protrusions, are formed into a plurality of respective recesses. The plurality of recesses includes any two recesses adjacent to each other between which walls are formed. When welding mark Y is viewed from the stacking direction of positive electrode tabs, the walls include a wall extending in a vibration direction of ultrasonic tool T that is larger in width than another wall intersecting the vibration direction. Thus, when welding mark Y includes a plurality of walls extending in respective different directions as viewed from the stacking direction, a wall of the walls, the wall extending along a straight line with small angle t(°) formed by welding mark Y and a straight line along the direction in which the positive electrode tab 25H extends, may be smaller in width than another wall extending along a straight line with angle t larger than small angle t. Fig. 5 illustrates welding mark Y provided with walls extending in a lattice shape, for example.

As described above, cap 41 and positive electrode tabs 25 are joined in joint S by ultrasonic welding. At this time, welding mark Y is formed on the lower surface of positive electrode tab 25H along a vibration direction of the ultrasonic welding. In other words, the ultrasonic welding is performed with the vibration direction inclined by substantially 45° with respect to a direction in which positive electrode tab 25H is disposed. As a result, an occurrence of a crack in joint S can be reduced.

### "Manufacturing process of power storage device"

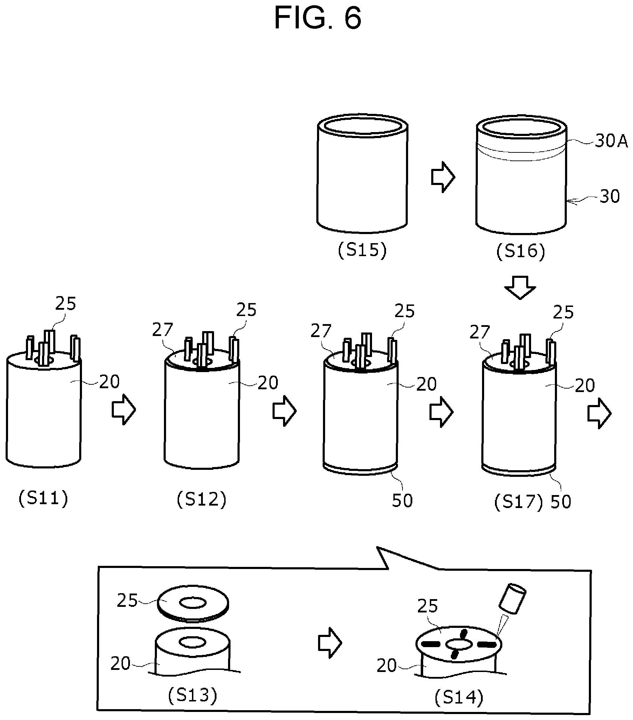

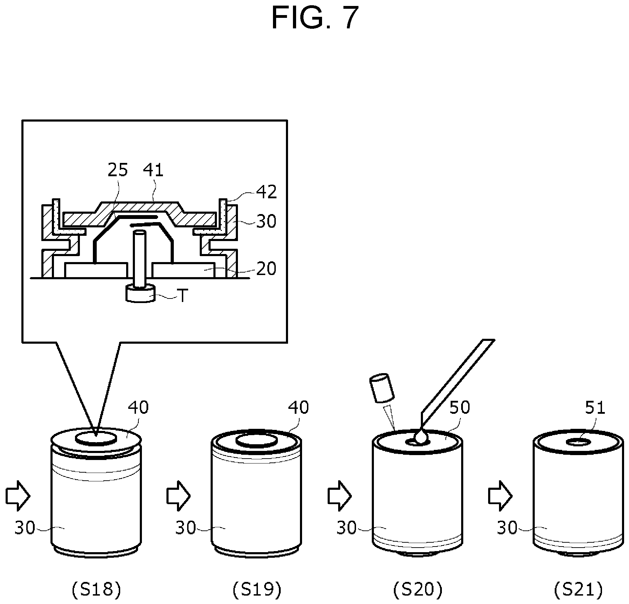

With reference to Figs. 6 and 7, a manufacturing process of power storage device 10 will be described.

As illustrated in Fig. 6, electrode body 20 is produced by winding positive electrode 21 and negative electrode 22 with separator 23 interposed therebetween using a winding machine in step S11. In step S12, upper insulating plate 27 in a disk shape is disposed on an upper end of electrode body 20 from which positive electrode tab 25 protrudes. In step S13, negative electrode current collecting plate 50 in a disk shape including center hole 50A is disposed on a lower end of electrode body 20. In step S14, the core body exposed part of the negative electrode, which protrudes toward the lower end of electrode body 20, and negative electrode current collecting plate 50 are joined to each other by laser welding.

In step S15, exterior can 30 in a cylindrical shape is prepared. In step S16, groove 30A is formed near the upper end opening of exterior can 30 by spinning exterior can 30 from the outside. In step S17, electrode body 20 joined to negative electrode current collecting plate 50 produced in step S14 is joined is inserted into exterior can 30.

As illustrated in Fig. 7, positive electrode tabs 25 are laid down inward in the radial direction of electrode body 20 to be partially overlapped with each other in step S18. Then, corresponding one of positive electrode tabs 25 is joined to the lower surface of cap 41 of sealing body 40. At this time, ultrasonic tool T in an elongated strip shape is inserted from center hole 50A of negative electrode current collecting plate 50 and the central part of electrode body 20 to join the plurality of positive electrode tabs 25 to the lower surface of cap 41 with ultrasonic welding. In step S19, sealing body 40 is disposed on groove 30A of exterior can 30, and the upper end of exterior can 30 is bent radially inward to caulk sealing body 40 to exterior can 30. A method for manufacturing power storage device 10 of the present disclosure may not necessarily use the method described above for joining. For example, cap 41 and positive electrode tabs 25 may be joined without inserting ultrasonic tool T into the hollow part of electrode body 20 before electrode body 20 is accommodated in exterior can 30.

In step S20, a periphery of the lower end opening of exterior can 30 and an edge of negative electrode current collecting plate 50 are joined by laser welding, and a non-aqueous electrolyte is further injected from below exterior can 30. In step S21, a periphery of center hole 50A of negative electrode current collecting plate 50 and an edge of sealing plug 51 are joined by laser welding.

The present invention is not limited to the above-described exemplary embodiment and a modification thereof, and it is a matter of course that various changes and improvements can be made within the scope of the matters described in the scope of claims of the present application.

### REFERENCE MARKS IN THE DRAWINGS

10: power storage device
20: electrode body
21: positive electrode
22: negative electrode
23: separator
25: positive electrode tab
27: upper insulating plate
30: exterior can
30A: groove
40: sealing body
41: cap (positive electrode external terminal)
41A: raised part
42: gasket
42A: through-hole
42B: annular part
50: negative electrode current collecting plate (negative electrode external terminal)
50A: center hole
51: sealing plug
S: joint
T: ultrasonic tool
Y: welding mark

## Claims

1. A power storage device comprising:
an electrode body in which a positive electrode, a negative electrode, and a separator are wound;
an external terminal disposed on a first end side of the electrode body in a winding axis direction of the electrode body; and
a plurality of tabs connecting a first electrode to the external terminal, the first electrode being one of the positive electrode and the negative electrode, the plurality of tabs at least partially overlapping each other forming an overlapped part that is joined to the external terminal.

2. The power storage device according to Claim 1, further comprising:
an exterior body with an opening; and
a cap that closes the opening, wherein
the cap serves as the external terminal, and
the plurality of tabs are stacked and joined to the cap.

3. The power storage device according to Claim 2, wherein the plurality of tabs includes a tab stacked at a position farthest from the external terminal, the tab being folded back and being doubly stacked and joined in a joint with the external terminal.

4. The power storage device according to Claim 2 or 3, wherein the plurality of tabs includes a tab stacked at a position farthest from the external terminal, the tab being provided with a welding mark in a direction intersecting a direction in which the tab extends in the joint with the external terminal.

5. The power storage device according to any one of Claims 2 to 4, wherein
the electrode body includes a hollow part passing through the electrode body in the winding axis direction, and
a joint of the plurality of tabs is exposed from the hollow part when viewed from a second end side of the electrode body, the second end side being opposite the first end side in the winding axis direction.

6. The power storage device according to any one of Claims 2 to 5, further comprising a current collecting plate disposed on a second end side of the electrode body and connected to a second electrode, the second end side being opposite the first end side in the winding axis direction, the second electrode being one of the positive electrode and the negative electrode and different from the first electrode.

7. The power storage device according to Claim 6, wherein
the electrode body includes the hollow part passing through the electrode body in the winding axis direction,
a joint of the plurality of tabs is exposed from the hollow part when viewed from the second end side in the winding axis direction,
the current collecting plate includes a through-hole, and
the through-hole and the hollow part overlap each other in the winding axis direction.

8. The power storage device according to any one of Claims 2 to 7, wherein the plurality of tabs are disposed radially from a central part of the external terminal.

9. The power storage device according to any one of Claims 2 to 8, wherein the plurality of tabs include tabs adjacent to each other that are disposed forming a substantially equal angle.

10. The power storage device according to any one of Claims 2 to 9, wherein some of the plurality of tabs are disposed overlapping each other in a radial direction of the electrode body.

11. The power storage device according to any one of Claims 2 to 8, wherein
the plurality of the tabs include
a tab that is joined close to an outer periphery of the electrode body and
a tab that is joined close to an inner periphery of the electrode body,
in a joint between the plurality of tabs and the external terminal, the tab that is joined close to an outer periphery of the electrode body is stacked at a position closer to the external terminal than the tab that is joined close to the inner periphery of the electrode body.

12. The power storage device according to Claim 11, wherein
the plurality of tabs include
a first tab closest to an innermost periphery of the electrode body in a winding direction and being stacked at a position farthest from the external terminal in a stacking direction of the joint, and
a second tab adjacent to the first tab in the winding direction, and
the first tab protrudes from the electrode body by a longer length than the second tab.
